# EUROPEAN PATENT APPLICATION

(11) **EP 2 244 471 A2**
(43) Date of publication of application: **27.10.2010**
(21) Application number: 09179216.8
(22) Date of filing: 15.12.2009
(51) Int. Cl.: H04N 5/445

(54) **Method for providing broadcast program and broadcast receiving apparatus using the same**

(30) Priority: 20.04.2009 KR 20090034237
(71) Applicant: SAMSUNG ELECTRONICS CO., LTD., Suwon-si Gyeonggi-do 442-742 (KR)
(72) Inventor: Shin, Seung-yeob, Gyeonggi-do (KR); Koo, Ja-yoon, Gyeonggi-do (KR); Kim, Yong-beom, Seoul (KR)
(74) Representative: Rooney, John-Paul

(57) **Abstract**

A method for providing a broadcast program and a broadcast receiving apparatus using the same are provided. The method for providing a broadcast program includes providing an electronic program guide (EPG); and receiving and providing an internet protocol (IP) TV broadcast program corresponding to a general TV broadcast program which is selected by a user using the EPG. Accordingly, a user searches for and selects a desired IP TV broadcast program more conveniently.

## Description

### CROSS-REFERENCE TO RELATED APPLICATIONS

This application claims priority from Korean Patent Application No. 10-2009-0034237, filed on April 20, 2009 in the Korean Intellectual Property Office, the disclosure of which is incorporated herein by reference in its entirety.

### BACKGROUND

### 1. Field

Apparatuses and methods consistent with the exemplary embodiments relate to providing a broadcast program, and more particularly, to providing a user with a broadcast program received through various media such as terrestrial wave, cable, and satellite broadcasting.

### 2. Description of the Related Art

With the development of Internet Protocol television (IP TV), the IP TV service allows a user to watch a desired broadcast program at a desired time, unlike general terrestrial, cable, or satellite broadcasting service. The IP TV has been widely and rapidly used due to its convenience.

However, users mainly watch a general terrestrial broadcast program, cable broadcast program, or satellite broadcast program since the users are more familiar with such broadcast programs that the IP TV service. That is, the users tend to watch IP TV broadcast programs secondarily.

For example, the users watch programs they missed in a general terrestrial, cable or satellite broadcast program via IP TV broadcasting.

To do this, the users should call a graphical user interface (GUI) having a list of IP TV broadcast programs and search for a desired IP TV broadcast program through the GUI. However, as there are a lot of IP TV broadcast programs provided, it may be difficult for a user to find a desired IP TV broadcast program.

### SUMMARY

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

One or more embodiments provide a method for providing an IP TV broadcast program corresponding to a general TV broadcast program which is selected using an electronic program guide (EPG) so that a user can conveniently select a desired IP TV broadcast program, and a broadcast receiving apparatus using the same.

One or more embodiments provide a method for providing a previously stored broadcast program corresponding to a real time broadcast program which is selected using a broadcast schedule table of real time broadcast programs, and a broadcast receiving apparatus using the same.

One or more embodiments provide a method for selecting a broadcast program which corresponds to another broadcast program selected using a broadcast schedule table, and providing the selected broadcast program in a different communication manner from that of the another broadcast program.

According to an aspect of an exemplary embodiment, there is provided a method for providing a broadcast program, including storing an EPG regarding a general TV broadcast program, the EPG being received together with the general TV broadcast program; outputting the stored EPG; requesting an internet protocol (IP) TV broadcast program corresponding to a general TV broadcast program which is selected using the EPG; and providing an IP TV broadcast program which is received in response to the request.

The requesting may include transmitting a request message containing information regarding the IP TV broadcast program corresponding to the general TV broadcast program selected using the EPG, and requesting the corresponding IP TV broadcast program.

The requesting may include writing the request message with reference to information which matches the IP TV broadcast program with the selected general TV broadcast program, and is listed in a database (DB).

The requesting may include transmitting a request message containing information regarding the general TV broadcast program selected using the EPG, and requesting the IP TV broadcast program.

The EPG may include an EPG regarding general TV broadcast programs which are previously broadcast.

The method may further include storing the EPG, and the providing the EPG may include providing an EPG regarding general TV broadcast programs which are stored when the EPG. is stored.

The requesting may include requesting an IP TV broadcast program reception device connected to a general TV broadcast program reception device to provide the IP TV broadcast program, and the requesting may include requesting an IP TV broadcast service server connected via the Internet to provide the IP TV broadcast program.

The corresponding IP TV broadcast program may include an IP TV broadcast program having the same content as that of the general TV broadcast program or an IP TV broadcast program related to the general TV broadcast program.

The IP TV broadcast program related to the general TV broadcast program may include: 1) an IP TV broadcast program of which a title is the same as that of the selected general TV broadcast program but an episode is different from that of the selected general TV broadcast program; 2) an IP TV broadcast program of which some characters correspond to those of the selected general TV broadcast program; or 3) an IP TV broadcast program of which a genre is the same as that of the selected general TV broadcast program.

The requesting may include requesting the IP TV broadcast program using a request message containing common information between the general TV broadcast program selected by the user and the IP TV broadcast program.

According to an aspect of an exemplary embodiment, there is provided a method for providing a broadcast program, including receiving a request for a broadcast program from a general TV broadcast program reception device; requesting an IP TV broadcast service server to transmit the requested broadcast program; and transmitting an IP TV broadcast program that corresponds to the requested broadcast program and is received from the IP TV broadcast service server to the general TV broadcast program reception device.

The requested broadcast program may be an IP TV broadcast program, and the requesting may include requesting the IP TV broadcast service server to transmit the requested IP TV broadcast program.

The requested broadcast program is a general TV broadcast program, and the requesting may include: 1) requesting the IP TV broadcast service server to provide the requested general TV broadcast program; or 2) requesting the IP TV broadcast service server to provide an IP TV broadcast program corresponding to the general TV broadcast program.

The requesting may include requesting the IP TV broadcast service server to provide the IP TV broadcast program with reference to a database (DB) which indicates that the IP TV broadcast program matches with the general TV broadcast program.

According to an aspect of an exemplary embodiment, there is provided a method for providing a broadcast program, including receiving a request for a general TV broadcast program; searching for an IP TV broadcast program corresponding to the requested general TV broadcast program; and transmitting the IP TV broadcast program in response to the request.

The searching may include searching for the IP TV broadcast program with reference to a DB which indicates the general TV broadcast program matches with the IP TV broadcast program.

According to an aspect of an exemplary embodiment, there is provided a broadcast receiving apparatus, including a display; a storage unit which stores an electronic program guide (EPG) regarding general TV broadcast programs; and a controller which displays the EPG stored in the storage unit on the display, requests an Internet Protocol (IP) TV broadcast program corresponding to a general TV broadcast program selected using the EPG, and displays the IP TV broadcast program received in response to the request on the display.

According to an aspect of an exemplary embodiment, there is provided a method for providing a broadcast program, including storing a broadcast schedule table of real time broadcast programs, the broadcast schedule table being received together with real time broadcast programs; providing the stored broadcast schedule table; requesting a stored broadcast program corresponding to a real time broadcast program selected using the broadcast schedule table; and receiving the stored broadcast program in response to the request.

According to an aspect of an exemplary embodiment, there is provided a method for providing a broadcast program, including storing a broadcast schedule table of broadcast programs, the broadcast schedule table being received together with the broadcast programs being broadcast in a first communication manner; providing the stored broadcast schedule table; requesting a second broadcast program corresponding to a first broadcast program selected by a user from the broadcast programs based on the broadcast schedule table, the second broadcast program being broadcast in a second communication manner; and receiving the second broadcast program in response to the request.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating a broadcasting system according to an exemplary embodiment;
FIG. 2 is a detailed block diagram of an IP TV of FIG. 1, according to an exemplary embodiment;
FIG. 3 is a flowchart provided to explain a process of providing a broadcast program to a user using the broadcasting system of FIG. 1, according to an exemplary embodiment;
FIG. 4 is a table illustrating a database (DB) for converting an identification (ID) of a broadcast program, according to an exemplary embodiment;
FIG. 5 is a flowchart provided to explain another process of providing a broadcast program to a user using the broadcasting system of FIG. 1, according to an exemplary embodiment;
FIG. 6 is a block diagram illustrating a broadcasting system according to another exemplary embodiment;
FIG. 7 is a detailed block diagram illustrating a set-top box (STB) of FIG. 6, according to an exemplary embodiment;
FIG. 8 is a flowchart provided to explain a process of providing a broadcast program to a user using the broadcasting system of FIG. 6, according to an exemplary embodiment;
FIG. 9 is a flowchart provided to explain another process of providing a broadcast program to a user using the broadcasting system of FIG. 6, according to an exemplary embodiment;
FIG. 10 is a block diagram illustrating a broadcasting system applicable to yet another exemplary embodiment;
FIG. 11 is a detailed block diagram illustrating a digital television (DTV) of FIG. 10, according to an exemplary embodiment;
FIG. 12 is a detailed block diagram illustrating a set-top box (STB) of FIG. 10, according to an exemplary embodiment;
FIG. 13 is a flowchart provided to explain a process of providing a broadcast program to a user using the broadcasting system of FIG. 10, according to an exemplary embodiment;
FIG. 14 is a flowchart provided to explain another process of providing a broadcast program to a user using the broadcasting system of FIG. 10, according to an exemplary embodiment; and
FIG. 15 a flowchart provided to explain the other process of providing a broadcast program to a user using the broadcasting system of FIG. 10, according to an exemplary embodiment.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

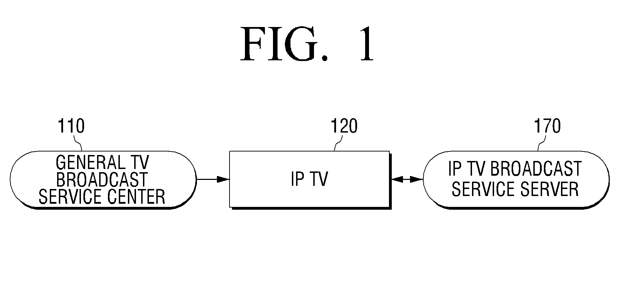

FIG. 1 is a block diagram illustrating a broadcasting system according to an exemplary embodiment. Referring to FIG. 1, the broadcasting system includes a broadcast service center for a general television (TV) 110, an Internet Protocol Television (IP TV) 120, and a broadcast service server for an IP TV 170.

The general TV broadcast service center 110 provides a user with broadcast programs for a general TV and an electronic program guide (EPG) of the broadcast programs via terrestrial wave, cable, or satellite. The broadcast program for a general TV is a real time broadcast program, and is unidirectional in that the broadcast program is provided according to a broadcast schedule.

The IP TV broadcast service server 170 provides a user with broadcast programs for an IP TV via the Internet. The IP TV broadcast program can be a real time broadcast program, but most of the IP TV broadcast programs are stored broadcast programs. The IP TV broadcast program is bi-directional in that the IP TV broadcast program is provided according to a user's request.

The IP TV 120 receives an IP TV broadcast program which is provided by the IP TV broadcast service server 170, plays back the received IP TV broadcast program, and provides a user with the played back IP TV broadcast program.

Additionally, the IP TV 120 may receive a general TV broadcast program from the general TV broadcast service center 110, play back the received general TV broadcast program, and provide a user with the played back general TV broadcast program. In addition, if a user requests the general broadcast program to be displayed, the IP TV 120 displays an EPG for the general broadcast program to provide it to the user.

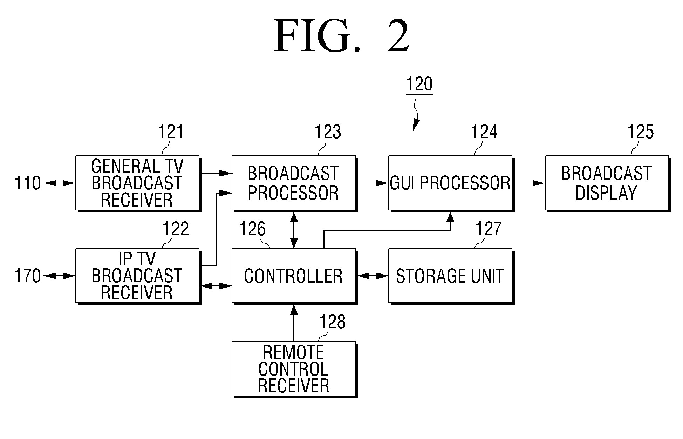

FIG. 2 is a detailed block diagram of the IP TV 120 of FIG. 1. Referring to FIG. 2, the IP TV 120 includes a general TV broadcast receiver 121, an IP TV broadcast receiver 122, a broadcast processor 123, a graphical user interface (GUI) processor 124, a broadcast display 125, a controller 126, a storage unit 127, and a remote control receiver 128.

The general TV broadcast receiver 121 receives a general TV broadcast program from the general TV broadcast service center 110 via terrestrial wave, cable, or satellite, and demodulates the received general TV broadcast program.

The IP TV broadcast receiver 122 receives an IP TV broadcast program from the IP TV broadcast service server 170 via the Internet and demodulates the received IP TV broadcast program. The IP TV broadcast receiver 122 transmits a message generated by the controller 126 to the IP TV broadcast service server 170 to request a broadcast program. The controller 126 will be explained in detail later.

The broadcast processor 123 performs signal processing such as de-multiplexing, decoding, and scaling of a general TV broadcast program, output from the general TV broadcast receiver 121, and an IP TV broadcast program output from the IP TV broadcast receiver 122.

The GUI processor 124 adds a GUI to an area of a broadcast program output from the broadcast processor 123. The EPG described above is a type of GUI added by the GUI processor 124.

The broadcast display 125 displays a broadcast program having a GUI which is added by the GUI processor 124.

The controller 126 controls the above elements of the IP TV 120 in response to a user command received from the remote control receiver 128.

The controller 126 stores an EPG which the broadcast processor 123 separately outputs from the general TV broadcast program in the storage unit 127. The storage unit 127 stores not only an EPG regarding a current time point and a future time point but also an EPG regarding a previous time point.

If a command for displaying an EPG is received from a user using the remote control receiver 128, the controller 126 controls the GUI processor 124 so that an EPG stored in the storage unit 127 is added to an area of a broadcast program output from the broadcast processor 123 as a GUI.

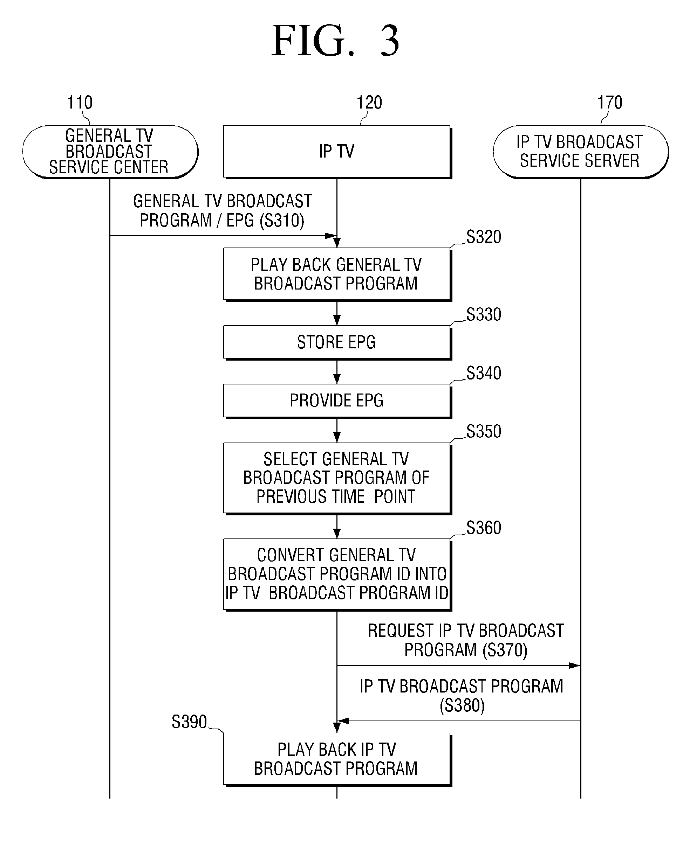

Hereinbelow, the process of providing a broadcast program to a user using the broadcasting system of FIG. 1 will be explained in detail with reference to FIG. 3. FIG. 3 is a flowchart provided to explain a method for providing a broadcast program according to an exemplary embodiment.

Referring to FIG. 3, if a general TV broadcast program and an EPG of the general TV broadcast program are received from the general TV broadcast service center 110 (S310), the IP TV 120 plays back the received general TV broadcast program (S320). The IP TV 120 stores the EPG of the received general TV broadcast program (S330).

Operation S310 is performed by the general TV broadcast receiver 121 of the IP TV 120. Operation S320 is performed by the broadcast processor 123 and the broadcast display 125 of the IP TV 120. Operation S330 is performed by the controller 126 and the storage unit 127 of the IP TV 120.

If a user requests the EPG of the general TV broadcast program, the IP TV 120 provides the user with, i.e., displays, the EPG stored in operation S330 (S340). Operation S340 is performed by controlling the GUI processor 124 to add the EPG stored in the storage unit 127 to an area of the broadcast program.

As described above, the storage unit 127 of the IP TV 120 contains not only an EPG regarding a current time point and a future time point (an EPG of a broadcast program being currently broadcast or not broadcast yet) but also an EPG regarding a previous time point (an EPG of a broadcast program broadcast previously).

Accordingly, the EPG provided in operation S340 includes both an EPG regarding a current time point and a future time point and an EPG regarding a previous time point.

Therefore, a user can select a general TV broadcast program of a current time point and a future time point and also a general TV broadcast program of a previous time point, or obtain detailed information regarding the broadcast programs using the EPG provided through operation S340.

If a user selects a general TV broadcast program of a previous time point through an EPG (S350), the IP TV 120 converts an ID of the general TV broadcast program selected in operation S350 into an ID of an IP TV broadcast program having the same content as that of the general TV broadcast program (S360).

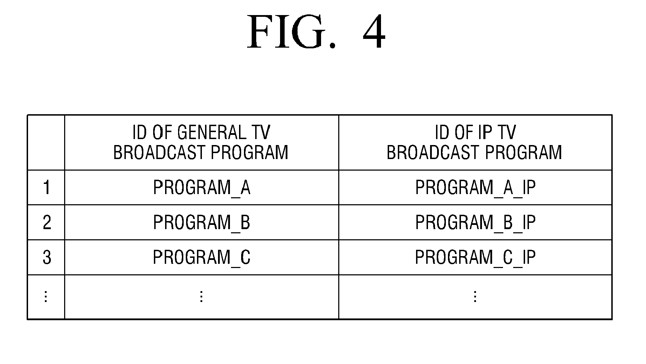

Operation S360 is performed by the controller 126 with reference to a database (DB) for converting an ID of a broadcast program stored in the storage unit 127 of the IP TV 200. In the DB for converting an ID of a broadcast program, an ID of a general TV broadcast program matches one to one with an ID of an IP TV broadcast program having the same content as that of the general TV broadcast program, and FIG. 4 illustrates an example of the DB used for converting an ID of a broadcast program.

The DB for converting an ID of a broadcast program may be implemented such that the DB is transmitted from the IP TV broadcast service server 170 and stored in the storage unit 127, or the DB is transmitted from another server on the Internet and stored in the storage unit 127.

The ID of a general TV broadcast program is needed to designate a general TV broadcast program, and the ID of an IP TV broadcast program is needed to designate an IP TV broadcast program. Accordingly, a user needs to know an ID of a desired IP TV broadcast program in order to request the IP TV broadcast program.

In operation S360, the controller 126 may obtain an ID of an IP TV broadcast program having the same content as that of a general TV broadcast program of the previous time point selected by a user.

The IP TV 120 requests the IP TV broadcast service server 170 to transmit a corresponding IP TV broadcast program using the ID of the IP TV broadcast program obtained in operation S360 (S370). The IP TV 120 receives the IP TV broadcast program required in operation S370 (S380), and plays back the received IP TV broadcast program so that a user may watch the IP TV broadcast program (S390).

Operation S370 is performed by transmitting a message for requesting an IP TV broadcast program to the IP TV broadcast service server 170 through the IP TV broadcast receiver 122 under the control of the controller 126. The message for requesting an IP TV broadcast program includes the ID of the IP TV broadcast program obtained in operation S360 in order to designate a desired IP TV broadcast program.

Operations S380 and S390 are performed by the IP TV broadcast receiver 122, the broadcast processor 123, and the broadcast display 125 of the IP TV 120.

Accordingly, a user may watch an IP TV broadcast program having the same content as that of a general TV broadcast program by selecting the general TV broadcast program which is previously broadcast through an EPG of a general TV broadcast program, rather than an EPG of an IP TV broadcast program.

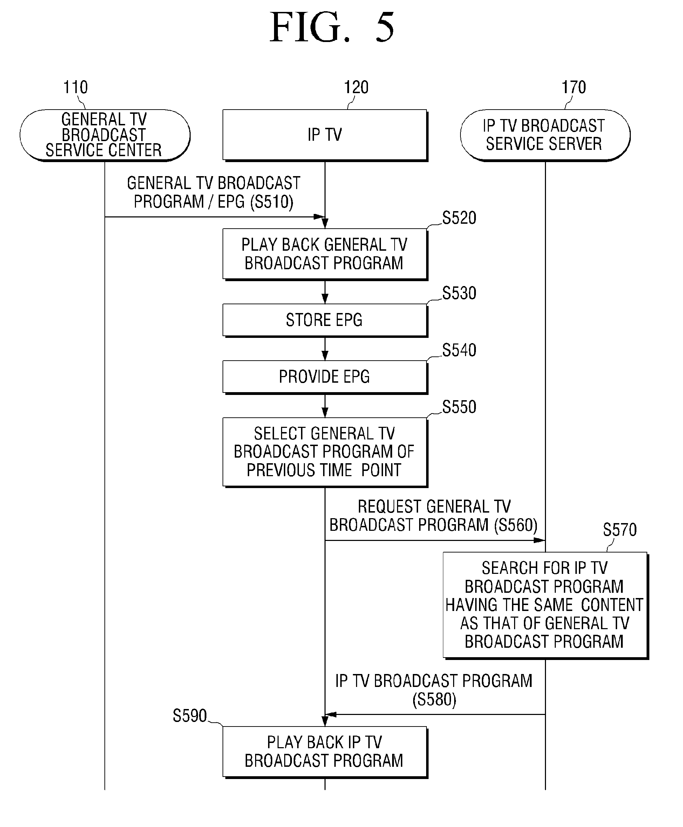

Hereinbelow, another process of providing a user with a broadcast program using the broadcasting system of FIG. 1 will be explained in detail with reference to FIG. 5. FIG. 5 is a flowchart provided to explain a method for providing a broadcast program according to another exemplary embodiment.

Detailed explanation regarding operations S510 to 550 will be omitted since operations S510 to S550 are analogous to operations S310 to S350 of FIG. 3, and explanation on operation after S550 will be provided hereinbelow.

The IP TV 120 requests the IP TV broadcast service server 170 to transmit a general TV broadcast program of a previous time point, which is selected in operation S550 (S560). Operation S560 is performed by transmitting a message for requesting a broadcast program to the IP TV broadcast service server 170 through the IP TV broadcast receiver 122. The message for requesting a broadcast program includes the ID of the general TV broadcast program of the previous time point selected in operation S550.

The IP TV broadcast service server 170 searches for an IP TV broadcast program having the same content as that of the general TV broadcast program of the previous time point requested in operation S560 (S570). Operation S570 is performed by the process that: 1) the IP TV broadcast service server 170 extracts an ID of the general TV broadcast program contained in the message for requesting a broadcast program received in operation S560; and 2) the IP TV broadcast service server 170 finds an ID of an IP TV broadcast program matching with an ID of the general TV broadcast program extracted from a DB for converting an ID of a broadcast program. The DB for converting an ID of a broadcast program may be the DB shown in FIG. 4.

The IP TV broadcast service server 170 transmits the IP TV broadcast program searched in operation S570 (S580), and the IP TV 120 plays back the received IP TV broadcast program so that a user may watch the IP TV broadcast program (S590).

A user may watch an IP TV broadcast program having the same content as that of a general TV broadcast program by selecting the general TV broadcast program which is previously broadcast through an EPG of a general TV broadcast program, not an EPG of an IP TV broadcast program.

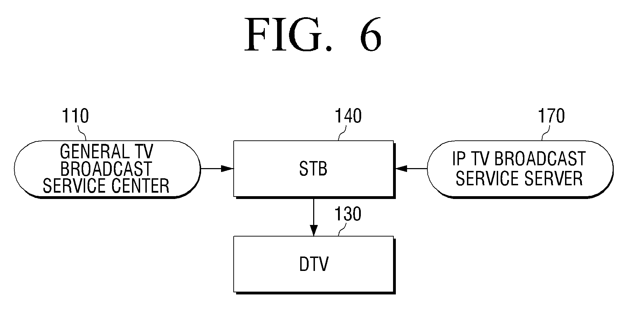

FIG. 6 is a block diagram illustrating a broadcasting system according to another exemplary embodiment. The broadcasting system of FIG. 6 includes the general TV broadcast service center 110, a DTV 130, a set-top box (STB) 140, and the IP TV broadcast service server 170.

The general TV broadcast service center 110 and the IP TV broadcast service server 170 are analogous with those of FIG. 1 and thus detailed description will be omitted.

The STB 140 receives a general TV broadcast program from the general TV broadcast service center 110, processes the received general TV broadcast program to convert it into a displayable format, and transmits the processed general TV broadcast program to the DTV 130.

The STB 140 receives an IP TV broadcast program from the IP TV broadcast service server 170, processes the received IP TV broadcast program to convert it into a displayable format, and transmits the processed IP TV broadcast program to the DTV 130.

The DTV 130 displays a broadcast program received from the STB 140 so that a user may watch the broadcast program.

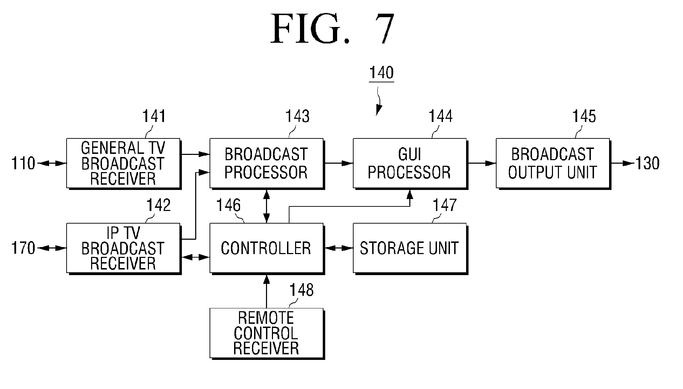

FIG. 7 is a detailed block diagram illustrating the STB 140 of FIG. 6. Referring to FIG. 6, the STB 140 includes a general TV broadcast receiver 141, an IP TV broadcast receiver 142, a broadcast processor 143, a GUI processor 144, a broadcast output unit 145, a controller 146, a storage unit 147, and a remote control receiver 148.

The general TV broadcast receiver 141, the IP TV broadcast receiver 142, the broadcast processor 143, the GUI processor 144, the controller 146, the storage unit 147, and the remote control receiver 148 of FIG. 7 are analogous with those of FIG. 2 and thus detailed description will be omitted.

The broadcast output unit 145 of FIG. 7 outputs a broadcast program having a GUI added by the GUI processor 144 to the DTV 130.

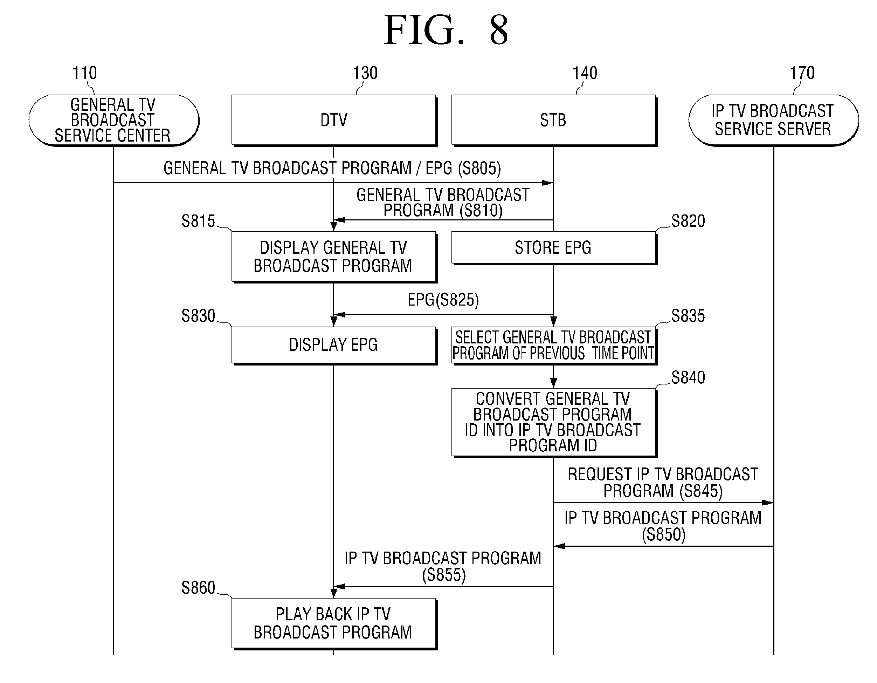

Hereinbelow, the process of providing a user with a broadcast program using the broadcasting system of FIG. 6 will be explained in detail with reference to FIG. 8. FIG. 8 is a flowchart provided to explain a method for providing a broadcast program according to yet another exemplary embodiment.

Referring to FIG. 8, if the STB 140 receives a general TV broadcast program and an EPG of the general TV broadcast program from the general TV broadcast service center 110 0 (S805), the STB 140 transmits the received general TV broadcast program to the DTV 130 (S810). The DTV 130 displays the general TV broadcast program received in operation S810 (S815).

The STB 140 stores the EPG of the general TV broadcast program received in operation S805 (S820).

If a user requests an EPG of a general TV broadcast program, the STB 140 transmits a broadcast program having the EPG stored in operation S820 to the DTV 130 (S825). Accordingly, the broadcast program having the EPG is displayed on the DTV 130.

The EPG displayed in operation S830 includes not only an EPG regarding a current time point and a future time point but also an EPG regarding a previous time point.

Accordingly, a user may select a general TV broadcast program of a current time point and a future time point and also a general TV broadcast program of a previous time point, and obtain detailed information of the broadcast programs using the EPG provided through operation S830.

If a user selects a general TV broadcast program of a previous time point using the EPG (S835), the STB 140 converts an ID of the selected general TV broadcast program into an ID of an IP TV broadcast program having the same content as that of the general TV broadcast program (S840). Operation S840 may be performed with reference to the DB for converting an ID of a broadcast program described above.

The STB 140 requests the IP TV broadcast service server 170 to transmit a corresponding IP TV broadcast program using an ID of an IP TV broadcast program obtained through operation S840 (S845). The STB 140 receives the IP TV broadcast program requested in operation S845 (S850), and transmits the received IP TV broadcast program to the DTV 130 (S855). Then, the DTV 130 displays the IP TV broadcast program transmitted in operation S855 (S860).

Accordingly, a user may watch an IP TV broadcast program having the same content as that of a general TV broadcast program by selecting the general TV broadcast program which is previously broadcast through an EPG of a general TV broadcast program, rather than an EPG of an IP TV broadcast program.

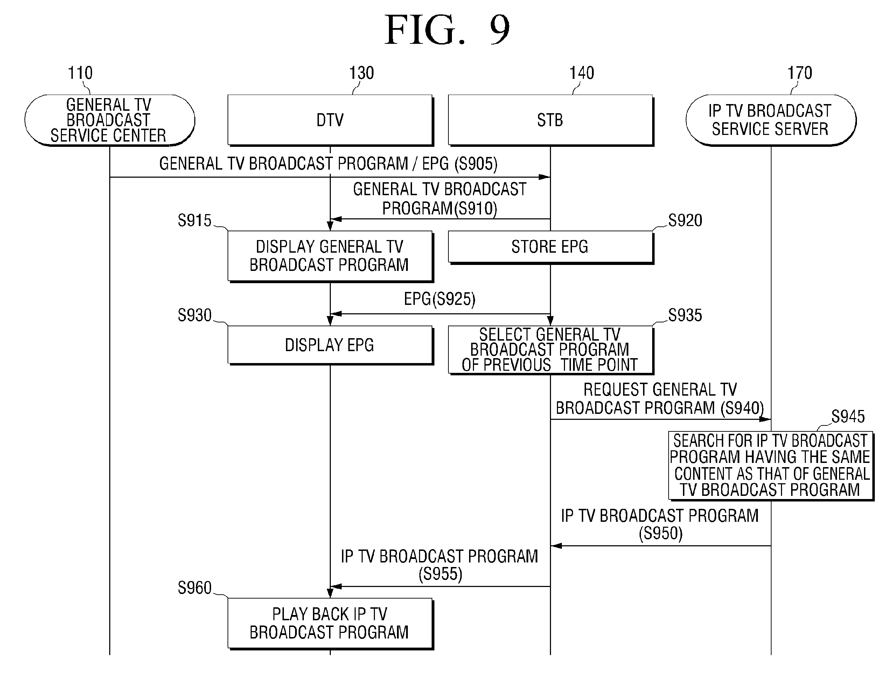

Hereinbelow, a process of providing a user with a broadcast program using the broadcasting system of FIG. 6 will be explained in detail with reference to FIG. 9. FIG. 9 is a flowchart provided to explain another process of providing a user with a broadcast program using the broadcasting system of FIG. 6.

Detailed explanation regarding operation S905 to S935 will be omitted since operations S905 to S935 are analogous to operations S805 to S835 of FIG. 8, and explanation on operation after S935 will be provided hereinbelow.

The STB 140 requests the IP TV broadcast service server 170 to transmit a general TV broadcast program of a previous time point selected in operation S935 (S940).

The IP TV broadcast service server 170 searches for an IP TV broadcast program having the same content as that of the general TV broadcast program of the previous time point requested in operation S940 (S945). Operation S945 is performed by the process that: 1) the IP TV broadcast server 170 extracts an ID of the general TV broadcast program contained in the message for requesting a broadcast program received in operation S940; and 2) the IP TV broadcast server 170 finds an ID of an IP TV broadcast program matching with an ID of the general TV broadcast program from a DB for converting an ID of a broadcast program. The DB for converting an ID of a broadcast program may be the DB shown in FIG. 4.

The IP TV broadcast service server 170 transmits the IP TV broadcast program searched in operation S945 (S950), and the STB 140 transmits the received IP TV broadcast program to the DTV 130 (S955). The DTV 130 displays the IP TV broadcast program received in operation S955 (S960).

By doing so, a user may watch an IP TV broadcast program having the same content as that of a general TV broadcast program by selecting the general TV broadcast program which is previously broadcast through an EPG of a general TV broadcast program, rather than an EPG of an IP TV broadcast program.

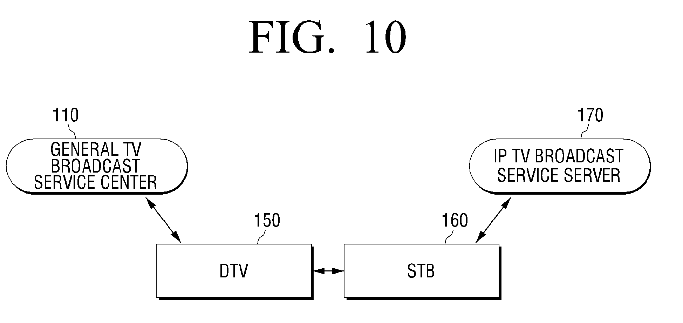

FIG. 10 is a block diagram illustrating a broadcasting system applicable to yet another exemplary embodiment. The broadcasting system of FIG. 10 includes the general TV broadcast service center 110, a DTV 150, a STB 160, and the IP TV broadcast service server 170.

The general TV broadcast service center 110 and the IP TV broadcast service server 170 of FIG. 10 are analogous to those of FIG. 1 and thus detailed description will be omitted.

The DTV 150 receives a general TV broadcast program from the general TV broadcast service center 110, plays back the received general TV broadcast program, and provides a user with the played back general TV broadcast program.

The STB 140 receives an IP TV broadcast program from the IP TV broadcast service center 170, processes the received IP TV broadcast program to convert it into a displayable format, and transmits the processed IP TV broadcast program to the DTV 150. The DTV 150 displays the IP TV broadcast program received from the STB 140 so that a user may watch the IP TV broadcast program.

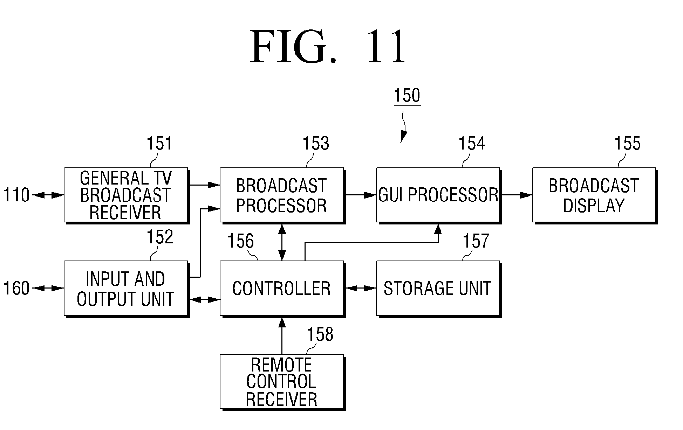

FIG. 11 is a detailed block diagram illustrating the DTV 150 of FIG. 10. Referring to FIG. 11, the DTV 150 includes a general TV broadcast receiver 151, an input and output unit 152, a broadcast processor 153, a graphical user interface (GUI) processor 154, a broadcast display 155, a controller 156, a storage unit 157, and a remote control receiver 158.

The general TV broadcast receiver 151, the broadcast processor 153, the GUI processor 154, the broadcast display 155, the controller 156, the storage unit 157, and the remote control receiver 158 illustrated in FIG. 11 are analogous with those of FIG. 2 and thus detailed description will be omitted.

The input and output unit 152 of FIG. 11: 1) receives an IP TV broadcast program from the STB 160 and transmits the IP TV broadcast program to the broadcast processor 153 or the broadcast display 155; and 2) transmits a message for requesting a broadcast program of the controller 156 to the STB 160.

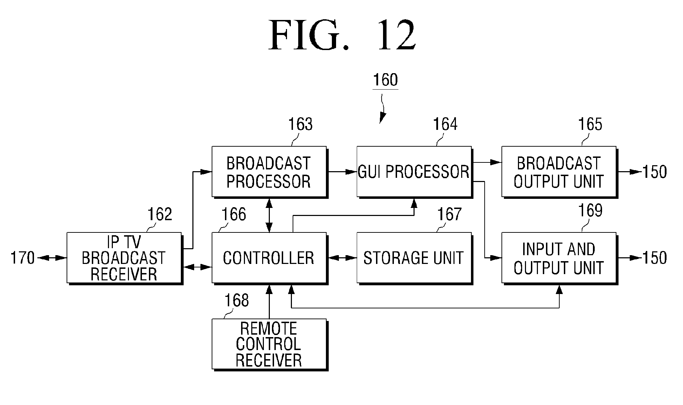

FIG. 12 is a detailed block diagram illustrating the STB 160 of FIG. 10. Referring to FIG. 12, the STB 160 includes an IP TV broadcast receiver 162, a broadcast processor 163, a GUI processor 164, a broadcast output unit 165, a controller 166, a storage unit 167, a remote control receiver 168, and an input and output unit 169.

The IP TV broadcast receiver 162, the broadcast processor 163, the GUI processor 164, the broadcast output unit 165, the controller 166, the storage unit 167, and the remote control receiver 168 illustrated in FIG. 12 are analogous to those of FIG. 7 and thus detailed description will be omitted.

The input and output unit of FIG. 12 transmits a message for requesting a broadcast program from the DTV 150 to the controller 166.

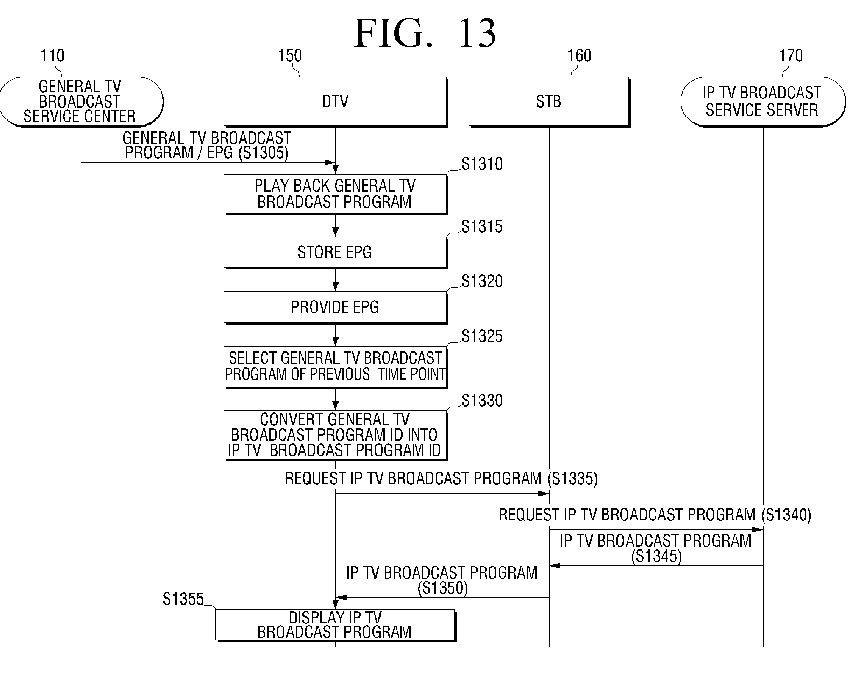

Hereinbelow, a process of providing a user with a broadcast program using the broadcasting system of FIG. 10 will be explained in detail with reference to FIG. 13. FIG. 13 is a flowchart provided to explain a method for providing a broadcast program according to yet another exemplary embodiment.

Detailed explanation regarding operations S1305 to S1330 of FIG. 13 will be omitted since operations S1305 to S1330 are analogous to operations S310 to S360 of FIG. 3, and explanation on operation after S1330 will be provided hereinbelow.

The DTV 150 transmits a message for requesting an IP TV broadcast program which is generated using an ID of an IP TV broadcast program obtained through operation S1330 to the STB 160 (S1335). The STB 160 transmits the message for requesting an IP TV broadcast program received in operation S1335 to the IP TV broadcast service server 170 (S1340).

The STB 160 receives the IP TV broadcast program from the IP TV broadcast service server 170 (S1345), processes the received IP TV broadcast program to convert it into a displayable format, and transmits the processed IP TV broadcast program to the DTV 150 (Sl350).

The DTV 150 displays the IP TV broadcast program received in operation S1350 so that a user may watch the IP TV broadcast program (S1355).

A user may watch an IP TV broadcast program having the same content as that of a general TV broadcast program by selecting the general TV broadcast program which is previously broadcast through an EPG of a general TV broadcast program, rather than an EPG of an IP TV broadcast program.

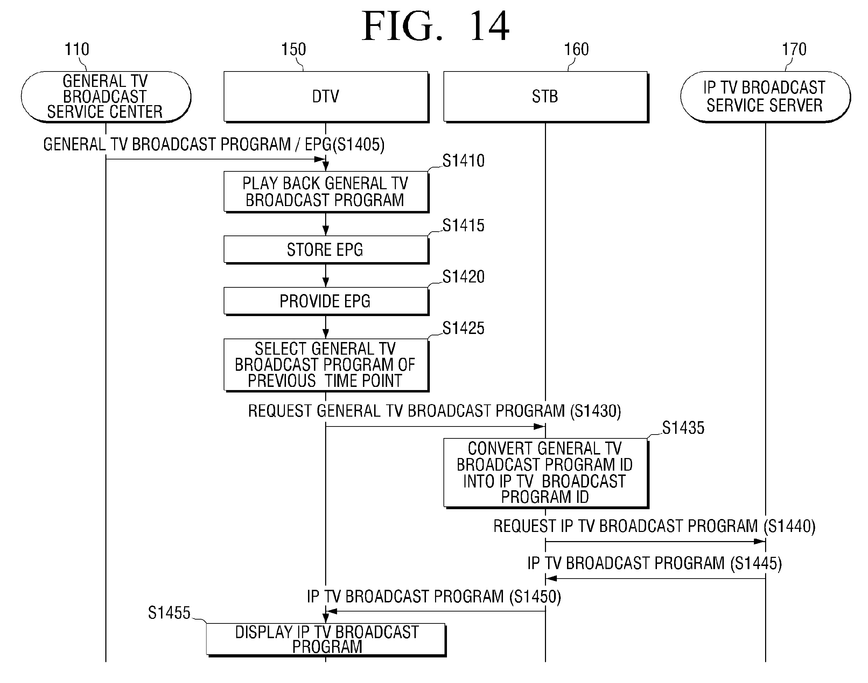

Hereinbelow, another process of providing a user with a broadcast program using the broadcasting system of FIG. 10 will be explained in detail with reference to FIG. 14. FIG. 14 is a flowchart provided to explain a method for providing a broadcast program according to yet another exemplary embodiment.

Detailed explanation regarding operations S1405 to S1425 will be omitted since operations S1405 to S1425 are analogous to operations S1305 to S1325 of FIG. 13, and explanation on operation after S1425 will be provided hereinbelow.

The DTV 150 transmits a message for requesting a general TV broadcast program of a previous time point, which is selected in operation S1425 to the STB 160 (S1430). The STB 160 converts an ID of the general TV broadcast program selected in operation S1430 into an ID of an IP TV broadcast program having the same content as that of the general TV broadcast program (S1435).

In operation S1435, 1) the controller 166 of the STB 160 extracts an ID of the general TV broadcast program contained in the message for requesting a broadcast program received in operation S1430, and 2) the controller 166 finds an ID of an IP TV broadcast program matching with an ID of the general TV broadcast program from a DB for converting an ID of a broadcast program. The DB for converting an ID of a broadcast program may be the DB shown in FIG. 4.

The STB 160 requests the IP TV broadcast service server 170 to transmit a corresponding IP TV broadcast program using an ID of the IP TV broadcast program obtained in operation S1435 (S1440). The STB 160 receives the IP TV broadcast program requested in operation S1440 (S1445), processes the received IP TV broadcast program to convert it into a displayable format, and transmits the processed IP TV broadcast program to the DTV 150 (S1450).

The DTV 150 displays the IP TV broadcast program received in operation S1450 so that a user may watch the IP TV broadcast program (S1455).

Accordingly, a user may select a general TV broadcast program which is previously broadcast through an EPG of a general TV broadcast program, rather than an EPG of an IP TV broadcast program, and watch an IP TV broadcast program having the same content that of the general TV broadcast program.

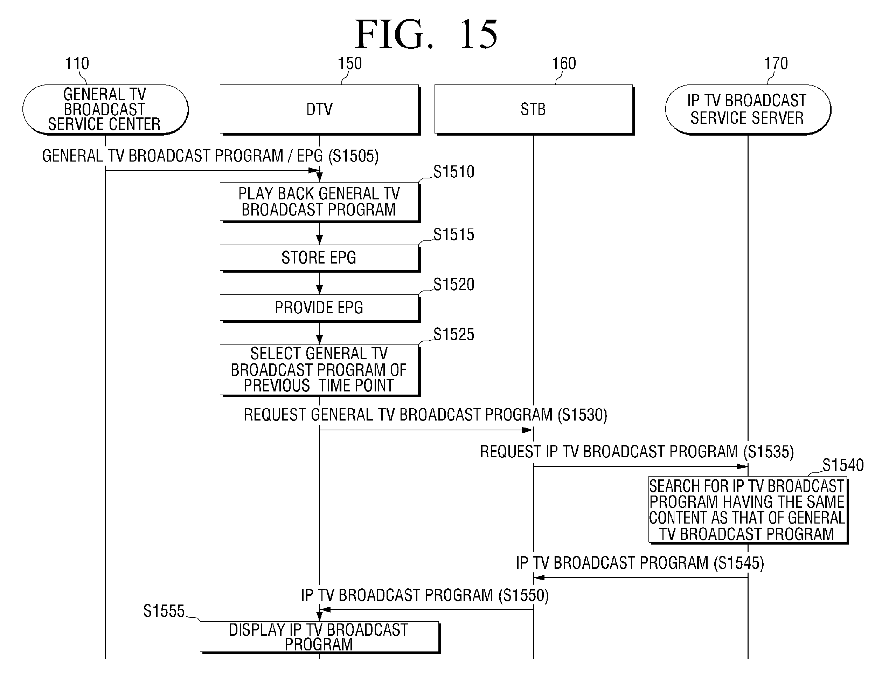

Hereinbelow, yet another process of providing a user with a broadcast program using the broadcasting system of FIG. 10 will be explained in detail with reference to FIG. 15. FIG. 15 a flowchart provided to explain a method for providing a broadcast program according to yet another exemplary embodiment.

Detailed explanation regarding operations S1505 to S1530 will be omitted since operations S1505 to S1530 are analogous to operations S1405 to S1430 of FIG. 14, and explanation on operation after S1530 will be provided hereinbelow.

The STB 160 transmits a message for requesting an IP TV broadcast program received through operation S1530 to the IP TV broadcast service server 170 (S1535). Then, the IP TV broadcast service server 170 searches for an IP TV broadcast program having the same content as that of the general TV broadcast program of a previous time point requested in operation S1535 (S1540).

The IP TV broadcast service server 170 transmits the IP TV broadcast program searched in operation S1540 (S1545), and the STB 160 processes the received IP TV broadcast program to convert it into a displayable format, and transmits the processed IP TV broadcast program to the DTV 150 (S1550).

The DTV 150 displays the IP TV broadcast program received in operation S1550 so that a user may watch the IP TV broadcast program (S1555).

Accordingly, a user may select a previous general TV broadcast program using an EPG of a general TV broadcast program, rather than an EPG of an IP TV broadcast program. and watch an IP TV broadcast program having the same content as that of the general TV broadcast program.

An IP TV broadcast program having the same content as that of a previous general TV broadcast program is provided in this exemplary embodiment, but this is merely exemplary for convenience of description. Alternatively, when an IP TV broadcast program having the same content as that of a general TV broadcast program of a current or future time point is provided, the general inventive concept may also be applied.

If a general TV broadcast program of a future time point is a recorded broadcast, rather than a live broadcast, and the IP TV broadcast service server 170 has the recorded broadcast, a user may be provided with the general TV broadcast program of the future time point which has not been broadcast yet.

A broadcast program is designated using an ID of a broadcast program in the exemplary embodiments, but this is merely an exemplary embodiment for convenience of description. Any information which designates a broadcast program may be used instead of an ID. For example, as it is possible to identify a broadcast program using a title and a date of a broadcast program, a broadcast program may be requested using the title and date of the broadcast program.

The title and date may be common information for a general TV broadcast program and an IP TV broadcast program corresponding to the general TV broadcast program. Accordingly, the present invention may designate and request an IP TV broadcast program through a message containing common information for a general TV broadcast program and an IP TV broadcast program corresponding to the general TV broadcast program.

While an IP TV broadcast program having the same content as that of a general TV broadcast program is provided in this exemplary embodiment, the exemplary embodiments may be implemented to provide an IP TV broadcast program related to a general TV broadcast program.

An IP TV broadcast program related to a general TV broadcast program may include: 1) an IP TV broadcast program having the same title as but different episodes from that of the general TV broadcast program; 2) an IP TV broadcast program featuring some characters same as those of the general TV broadcast program, and 3) an IP TV broadcast program in the same genre as that of the general TV broadcast program.

A plurality of IP TV broadcast programs related to a general TV broadcast program may be searched. In this situation, the present invention may be implemented to provide a user with a GUI for selecting one of a plurality of IP TV broadcast programs so that a user may select a desired one general TV broadcast program from among the plurality of IP TV broadcast programs.

Alternatively, a plurality of IP TV broadcast programs having the same content as that of a general TV broadcast program may be searched. For example, if an IP TV broadcast program has a plurality of sources or a plurality of service servers, a plurality of IP TV broadcast programs are searched. In this situation, the present invention may also be implemented to provide a user with a GUI for selecting one of the plurality of IP TV broadcast programs so that the user may select a desired IP TV broadcast program.

When IP TV broadcast programs are displayed on a GUI, additional information for the IP TV broadcast programs may be displayed. For example, whether the searched IP TV broadcast programs are a high definition (HD) broadcast program, or whether the searched IP TV broadcast programs are a charged broadcast program is displayed on a GUI as additional information so that the additional information together with the searched IP TV broadcast programs is provided to a user. By doing so, a user may efficiently refer to the additional information when selecting an IP TV broadcast program.

In the exemplary embodiments, the general TV broadcast program is an example of a real time broadcast program, and the IP TV broadcast program is an example of a stored broadcast program. Accordingly, the technical idea of the present invention may also be applied to a broadcasting system having a different type of a real time or previously stored broadcast program from the broadcast programs described above.

A general TV broadcast program and an IP TV broadcast program may be broadcast programs which are broadcast in different manner. Accordingly, one of ordinary skill in the art may apply the general inventive concept to any broadcasting system which has broadcast programs provided in different type irrespective of the type of broadcast program according to the exemplary embodiments.

The EPG described in the exemplary embodiments may be substituted with any broadcast schedule table although the broadcast schedule table is used in different name or different type.

As described above, according to exemplary embodiments, an IP TV broadcast program corresponding to a general TV broadcast program selected using an EPG of a general TV broadcast program is provided, and thus, a user may conveniently search and select a desired IP TV broadcast program.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a broadcast program, the method comprising:
storing an electronic program guide (EPG) regarding general television (TV) broadcast programs, the EPG is received together with at least one of the general TV broadcast programs;
outputting the stored EPG;
requesting an Internet Protocol (IP) TV broadcast program corresponding to a general TV broadcast program which is selected using the output EPG; and
receiving the IP TV broadcast program in response to the requesting.

2. The method as claimed in claim 1, wherein the requesting comprises transmitting a request message including information regarding the IP TV broadcast program corresponding to the general TV broadcast program which is selected, and requesting the IP TV broadcast program.

3. The method as claimed in claim 2, wherein the requesting comprises generating the request message with reference to information which matches the IP TV broadcast program with the general TV broadcast program, and is listed in a database.

4. The method as claimed in one of claim 1 to 3, wherein the requesting comprises transmitting a request message including information regarding the general TV broadcast program which is selected using the output EPG, and requesting the IP TV broadcast program.

5. The method as claimed in one of claim 1 to 4, wherein the EPG comprises an EPG regarding the general TV broadcast programs which were previously broadcast.

6. The method as claimed one of claim 1 to 5, wherein the EPG comprises an EPG regarding the general TV broadcast programs which are stored when the EPG is stored.

7. The method as claimed in one of claim 1 to 6, wherein the requesting comprises requesting an IP TV broadcast program reception device connected to a general TV broadcast program reception device to provide the IP TV broadcast program.

8. The method as claimed in one of claim 1 to 7, wherein the requesting comprises requesting an IP TV broadcast service server connected via the Internet to provide the IP TV broadcast program.

9. The method as claimed in one of claim 1 to 8, wherein the IP TV broadcast program comprises an IP TV broadcast program having the same content as that of the general TV broadcast program or an IP TV broadcast program related to the general TV broadcast program.

10. The method for providing a broadcast program as claimed in claim 9, wherein the IP TV broadcast program related to the general TV broadcast program comprises:
1) an IP TV broadcast program having a title that is the same as that of the general TV broadcast program and an episode that is different from that of the general TV broadcast program;
2) an IP TV broadcast program having some characters that correspond to those of the general TV broadcast program; or
3) an IP TV broadcast program having a genre that is the same as that of the general TV broadcast program.

11. The method as claimed in one of claim 1 to 10, wherein the requesting comprises requesting the IP TV broadcast program using a request message containing common information between the general TV broadcast program that is selected using the output EPG and the IP TV broadcast program.

12. A method for providing a broadcast program, the method comprising:
receiving a request for a broadcast program from a general TV broadcast program reception device;
requesting an Internet Protocol (IP) television (TV) broadcast service server to transmit the requested broadcast program; and
transmitting an IP TV broadcast program that corresponds to the requested broadcast program and is received from the IP TV broadcast service server to the general TV broadcast program reception device.

13. The method as claimed in claim 12, wherein the requested broadcast program is an IP TV broadcast program, and
wherein the requesting comprises requesting the IP TV broadcast service server to transmit the requested IP TV broadcast program.

14. The method as claimed in claim 12 or claim 13, wherein the requested broadcast program is a general TV broadcast program, and
wherein the requesting comprises:
1) requesting the IP TV broadcast service server to provide the requested general TV broadcast program; or
2) requesting the IP TV broadcast service server to provide an IP TV broadcast program corresponding to the general TV broadcast program.

15. The method as claimed in claim 14, wherein the requesting the IP TV broadcast service server to provide the IP TV broadcast program corresponding to the general TV broadcast program comprises requesting the IP TV broadcast service server to provide the IP TV broadcast program with reference to a database which indicates that the IP TV broadcast program matches with the general TV broadcast program.
